# EUROPEAN PATENT SPECIFICATION

(11) **EP 2 375 548 B1**
(45) Date of publication and mention of the grant of the patent: **22.06.2016**
(21) Application number: 10834155.3
(22) Date of filing: 05.02.2010
(51) Int. Cl.: H02K 5/24, H02K 7/116, F16H 25/20, A47B 9/04

(54) **DRIVE DEVICE FOR ELECTRIC LIFTING COLUMN**
ANTRIEBSVORRICHTUNG FÜR EINE ELEKTRISCHE HEBESÄULE
DISPOSITIF D'ENTRAÎNEMENT POUR COLONNE ÉLÉVATRICE ÉLECTRIQUE

(30) Priority: 01.12.2009 CN 200910154727
(43) Date of publication of application: 12.10.2011
(73) Proprietor: Zhejiang Jiecang Linear Motion Technology Co., Ltd, Shaoxing, Zhejiang 312500 (CN)
(72) Inventor: HU, Renchang, Shaoxing Zhejiang 312500 (CN); ZHANG, Xinfeng, Shaoxing Zhejiang 312500 (CN)
(74) Representative: 2s | ip Schramm Schneider Patentanwälte Rechtsanwälte
(86) International application number: PCT/CN2010/070528
(87) International publication number: WO 2011/066722

(56) References cited:
- EP-A1- 1 320 172
- EP-A2- 1 101 571
- WO-A1-2004/100632
- CN-A- 1 784 937
- CN-A- 1 822 476
- CN-C- 1 104 773
- CN-Y- 2 910 888
- US-A- 2 643 351

## Description

### FIELD OF THE INVENTION

The present invention relates to a driving device for driving an electric lifting vertical column going up and down.

### BACKGROUND OF THE INVENTION

The electric lifting vertical column can be widely used on tables, chairs, beds, etc. in home or in medical sites. Now taking the electric lifting tables as an example, electric lifting tables are mainly formed by two or more independent lifting columns and connection fixation and synchronization controller. It uses a screw nut gearing to achieve a circular motion into linear motion, and uses the controller to achieve synchronization going up and down of two or more synchronous lifting column.

State Intellectual Property Office of China discloses a title actuator of one patent application, publication No. CN1784937, published on June 7th, 2006. In accordance with its specifications and drawings it can be seen: The actuator includes a shell and a motor, the motor is connected to the gearing device by the shaft, the motor is installed inner of the closely matched grooves, the grooves are located in the foam plastic blocks or similar materials which are set and fixed within the shell, and the foam plastic can be used as reducing vibration and noises, the foam plastic also has additional given features and can be used in a particular type of motor and gearing device to reduce vibration and noises; meanwhile, the heat which is generated by the motor, the gearing device and the possible existing brakes is transferred to the shell, and the foam does not cause overheating of the motor components, but if you want to make the temperature fall down, the foam plastic between the motor and the motor shell can be made thinner in some important position to make the heat transfer easily. We can also choose to insert the metal foil / piece in the foam plastic blocks which are outside of the motor shell.

The foam plastic fixation structure entirely covers the motor sides, although the fixation effect is good, the heat dissipation performance is degraded, and it affects the service life of the motor, it causes the motor temperature increases due to the reduced heat dissipation performance, after heated the foam plastic is easy to be distorted, easy aging or even to be melt and it can no longer matches the motor closely, and thus it affects the fixation effect, and it further causes the motor generating vibration and affects the transfer effect of the gearing device on the motor shaft, that is, it affects the lifting procedure of the lifting vertical column.

EP 1 101 571 A2 relates to a driving device for an electric lifting vertical column with the features of the preamble of claim 1. US 2 643 351 A relates to an electric motor mounted in a motor shell comprising two shell halves. The motor is fixed in the shell by supporting two mutually parallel supporting blocks surround-ed by elastic supporting block sleeves where both sides of the motor are clampedbetween the elastic supporting block sleeves.

### BRIEF SUMMARY OF THE INVENTION

The purpose of the present invention is to provide a driving device for an electric lifting vertical column, which can effectively resolve the limited heat dissipation performance of the present driving motor, and which also can effectively resolve the problem of the limiting service life and the gearing effects which are affected by the present driving motor.

To solve the above technical problems, the present invention uses the following technical solution: the driving device of an electric lifting vertical column comprises a motor shell, a gearing device, and a motor, wherein the motor drives the gearing device which brings along the lifting vertical column going up and down; wherein the motor shell comprises a bottom box and a bottom plate; a tail pad and at least two mutually parallel supporting blocks are arranged on the bottom box; the lengths of the supporting blocks are smaller than the length of the motor; elastic supporting block sleeves are sleeved on the supporting blocks; the tail end of the motor is embedded into the tail pad; both sides of the motor are clamped between the elastic supporting block sleeves; the bottom plate is sealed and connected with the bottom box to realize the fixation of the motor.

Further, the distance between the elastic supporting block sleeves is less than the width of the motor, the motor is closely matched between the pressed elastic supporting block sleeves, it takes full advantage of the flexibility of the elastic supporting block sleeves, and it ensures the fixation effects of the motor.

Preferred, the elastic supporting block sleeves are made of rubber, wherein rubber is a reversible high-elastic deformation of polymer materials, it has good elasticity, aging resistance and low prices.

Further, the groove is set corresponding to the tail end of the motor on the tail pad, the tail end of the motor is fixed inner of the tail pad by closely matched to the groove, which is used to further fix the motor and reduce the vibration and noises.

Preferred, the tail pad is made of rubber, it has good elasticity, aging resistance and low prices.

Furthermore, the gearing device comprises a worm wheel, a head connected to the worm wheel and a gearing rod joint which are sequentially connected together; an output shaft of the motor drives the worm wheel to rotate; the worm wheel sequentially drives the head connected to the worm wheel and the gearing rod joint to rotate; and the gearing rod joint drives a gearing rod in the lifting vertical column to rotate. It smoothly realizes the lifting procedure of the lifting vertical column, the transmission is stable and reliable, and at the same time, it is convenient to be fixed and it is easy to be assembled and disassembled on fixing and maintenance service.

Further, the bottom of the turbine is fixed with gearing grooves. The gearing bulges are set corresponding to the gearing grooves on the top of the head connected to the worm wheel, the gearing bulges are embedded inner of the gearing grooves to realize the gearing procedure. Thus it has stable and reliable transmission and it is convenient to be assembled and disassembled.

Preferred, the gearing bulges are cylindrical, and the gearing bulges are uniformly distributed on the circular top surface of the head connected to the worm wheel, the gearing grooves are hollow cylinder and distributed correspondingly to the gearing bulges. Thus it has uniform power transmission and a good transmission effect.

Further, the fixing plates are set on the bottom box and the bottom of fixing plates contact to the gearing rod joint, the head connected to the worm wheel passes through the fixing plates and connect to the gearing rod joint. Thus it can ensure the gearing rod running by a straight line without vibration, and it improves transmission efficiency.

Further, a distance collar is set on the front of the motor, and the limiting grooves are uniformly distributed on the motor, the limiting bulges are set on the distance collar corresponding to the limiting grooves, the top of the distance collar is higher than the top of the motor when the limiting bulges are embedded into the limiting grooves, the bottom plate contacts with the distance collar in order to fix the motor, and the distance collar can absorb the vibration and it can prevent the motor from swinging from side to side when reversing.

As a result of the present invention taking the above technical solutions, it is beneficial to the heat dissipation of the motor when reliably fixing the motor. The tail end of the motor is fixed inner the tail pad, both sides of the motor are fixed by the elastic supporting block sleeves made of rubber. It has reliable fixation and low noises, further, the rest heat dissipation acreage on the surface of the motor is larger and it can improve the heat dissipation in effect, and thus it prolongs the service life of the motor. At the same time, due to the gearing function of adopting head connected to the worm wheel for the driving device, it has simple gearing structure, stable and reliable running, low noises, high transmission efficiency and low failure rate.

### BRIEF DESCRIPTION OF THE DRAWING

The followings are the further descriptions for the present invention combining to the drawings.
FIG. 1 is the schematic plan of the structure of the driving device of the electric lifting vertical column in the present invention.
FIG. 2 is the schematic plan of the structure of the gearing device in the present invention.
FIG. 3 is the schematic plan of the structure when the bottom box is fixed with head connected to the worm wheel in the present invention.
FIG. 4 is the schematic plan of the structure of fixing motor in the present invention.
FIG. 5 is the schematic plan of the structure when the bottom box inner completes fixing in the present invention.

### DETAILED DESCRIPTION OF THE PREFERRED EMBODIMENT

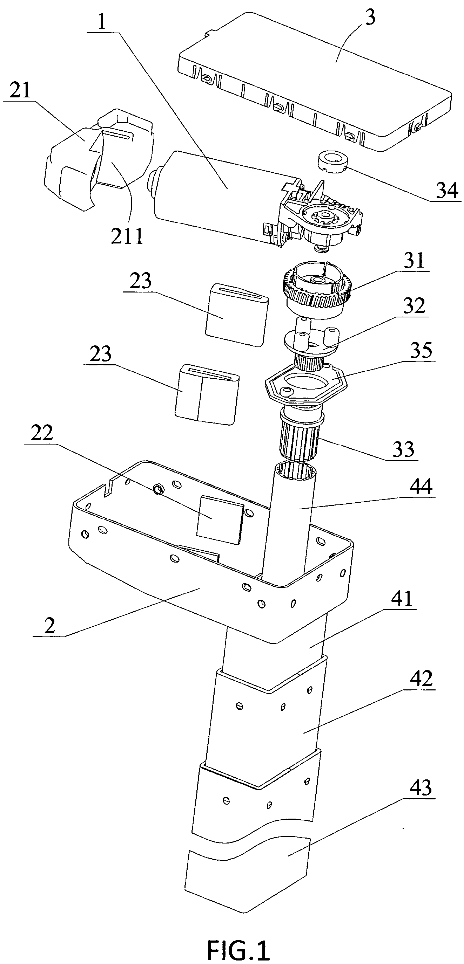

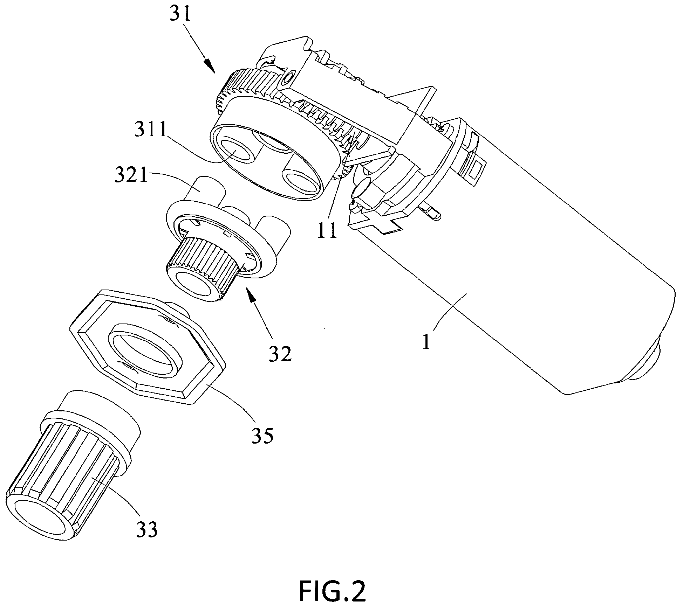

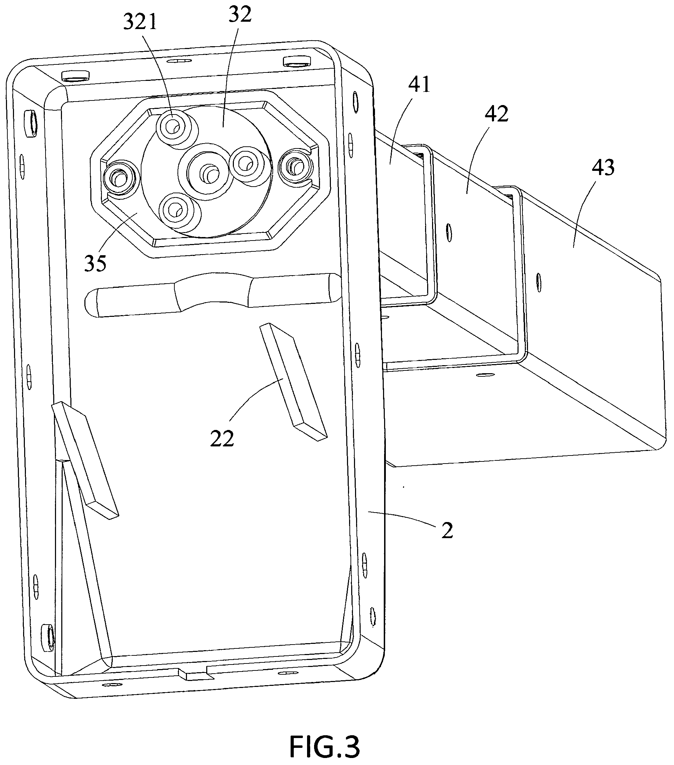

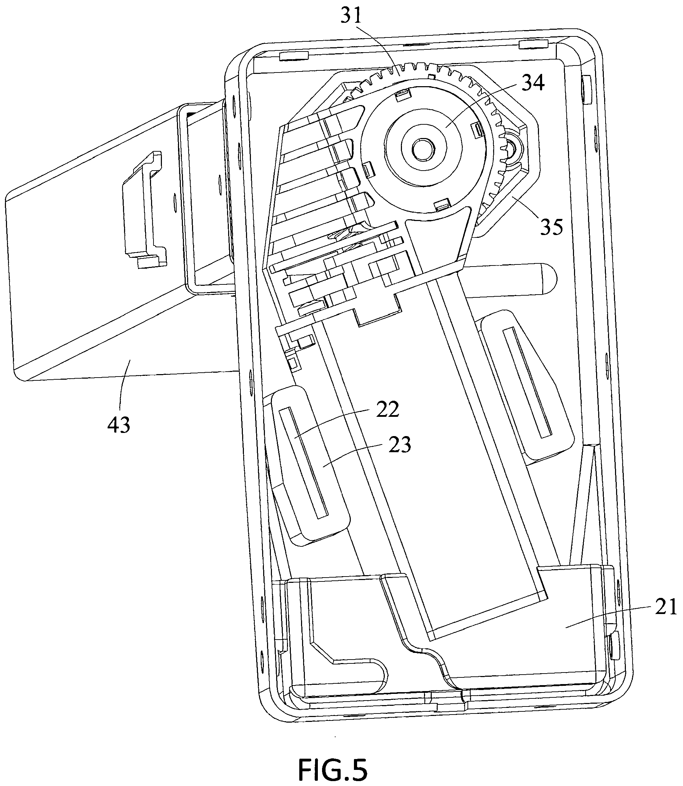

As shown in FIG. 1 to FIG. 5, the driving device of the electric lifting vertical column in the present invention includes a motor shell and a motor 1, the motor shell comprises a bottom box 2 and a bottom plate 3; the lifting vertical column includes the inner tube 41, the middle tube 42 and the outer tube 43 and the gearing rod 44, the motor 1 drives the gearing device which brings along the lifting vertical column going up and down; the gearing device comprises a worm wheel 31, a head 32 connected to the worm wheel 31 and a gearing rod joint 33 which are sequentially connected together; the worm 11 connected with the output shaft of the motor 1 drives the worm wheel 31 to rotate; the bottom of the worm wheel 31 is fixed with gearing grooves 311. The gearing bulges 321 are set corresponding to the gearing grooves 311 on the top of the head 32 connected to the worm wheel 31, the gearing bulges 321 are cylindrical, and the gearing bulges 321 are uniformly distributed on the circular top surface of the head 32 connected to the worm wheel 31, the gearing grooves 311 are hollow cylinder and distributed correspondingly to the gearing bulges 321, the gearing bulges 321 are embedded inner of the gearing grooves 311 to realize the gearing procedure, the fixing plates 35 are set on the bottom box 2, the through hole is set on the middle of the fixing plates 35, the bottom of fixing plates 35 contact to the gearing rod joint 33, the head 32 connected to the worm wheel 31 passes through the through hole on the middle of the fixing plates 35 and connects to the gearing rod joint 33, the worm wheel 31 sequentially drives the head 32 connected to the worm wheel 31 and the gearing rod joint 33 to rotate; and the gearing rod joint 33 drives a gearing rod 44 in the lifting vertical column to rotate. It smoothly realizes the lifting procedure of the lifting vertical column.

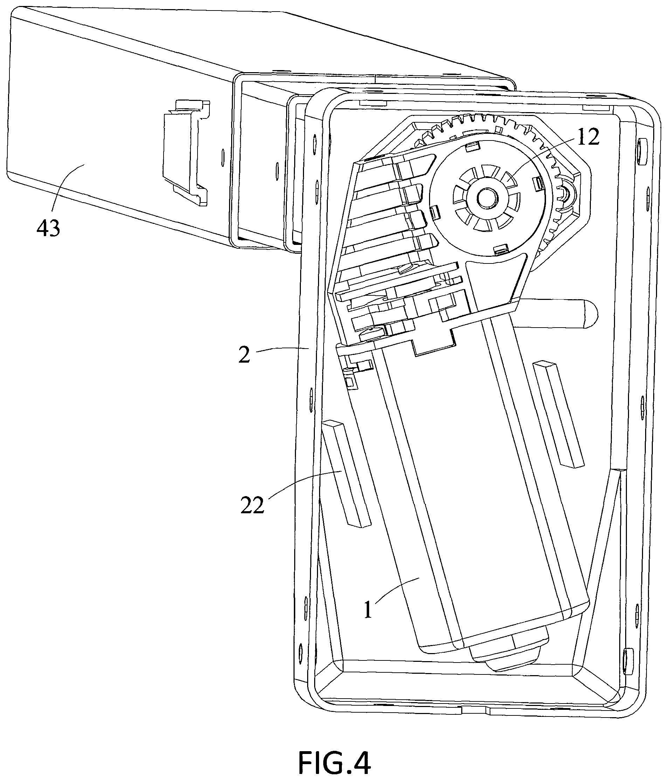

The tail pad 21 made of rubber and at least two mutually parallel supporting blocks 22 are arranged on the bottom box 2; the grooves 211 are set corresponding to the tail end of the motor 1 on the tail pad 21, the tail end of the motor 1 is fixed inner of the tail pad 21 by closely matched to the groove 211, wherein the tail pad 21 is used to fix the motor and reduce the vibration and noises. The supporting blocks 22 are two iron sheets which are welded on the bottom box 2, the lengths of the supporting blocks 22 are smaller than the length of the motor 1;the elastic supporting block sleeves 23 are sleeved on the supporting blocks 22; the elastic supporting block sleeves 23 are made of rubber, the distance between the elastic supporting block sleeves 23 is less than the width of the motor 1, the motor 1 is closely matched between the pressed elastic supporting block sleeves 23, the lengths of the elastic supporting block sleeves 23 are also smaller than the length of the motor 1; the elastic supporting block sleeves 23 only contact with part of the surface of two sides of the motor 1, the rest surface of the two sides and the whole top side of the motor 1 are not covered by the elastic supporting block sleeves 23, they are all exposed in the air, which is beneficial for sufficient heat dissipation, and it can prolong the service life of the motor 1 effectively. A distance collar 34 is set on the front of the motor 1, and the limiting grooves 12 are uniformly distributed on the motor 1, preferred, the limiting grooves 12 are distributed circularly as shown in Fig. 4. It is convenient for processing and the stress has features of uniformity and symmetry, the limiting bulges are set on the distance collar 34 corresponding to the limiting grooves 12, on one hand, the limiting bulges are embedded into the limiting grooves 12, it can prevent the motor 1 from swinging from side to side when reversing effectively, one the other hand, the top of the distance collar 34 is higher than the top of the motor 1 when the limiting bulges are embedded into the limiting grooves 12, the bottom plate 3 contacts with the distance collar 34 in order to fix the motor on the vertical direction, at last the bottom plate 3 is sealed and connected with the bottom box 2 to realize the whole fixation of the motor. The invention can reliably fix the motor and it is beneficial to the sufficient heat dissipation of the motor, it also can prolong the service life of the motor 1 effectively, and the driving device has simple gearing structure, stable and reliable transmission and low noises.

## Claims

1. A driving device of an electric lifting vertical column, which comprises a motor shell, a motor (1), and a gearing device, said motor (1) driving the gearing device which brings along the lifting vertical column going up and down;
wherein
said motor shell comprises a bottom box (2) and a bottom plate (3);
a tail pad (21) is arranged on said bottom box (2); and
said bottom plate (3) is sealed and connected with the bottom box (2) to realize the fixation of the motor (1);
**characterized in that**
at least two mutually parallel supporting blocks (22) are arranged on said bottom box (2);
the lengths of said supporting blocks (22) are smaller than the length of the motor (1);
elastic supporting block sleeves (23) are sleeved on said supporting blocks (22);
both sides of said motor (1) are clamped between the elastic supporting block sleeves (23); and
the tail end of said motor (1) is embedded into the tail pad (21).

2. A driving device of an electric lifting vertical column as defined in claim 1, further **characterized in that**:
the distance between said elastic supporting block sleeves (23) is less than the width of the motor (1),
said motor (1) is closely matched between the pressed elastic supporting block sleeves (23).

3. A driving device of an electric lifting vertical column as defined in claims 1 or 2, further **characterized in that**:
said elastic supporting block sleeves (23) are made of rubber.

4. A driving device of an electric lifting vertical column as defined in claim 1, further **characterized in that**:
a groove (211) is set corresponding to the tail end of the motor (1) on said tail pad (21), the tail end of said motor (1) is fixed inside of said tail pad (21) by closely matched to the groove (211).

5. A driving device of an electric lifting vertical column as defined in claims 1 or 4, further **characterized in that**:
said tail pad (21) is made of rubber.

6. A driving device of an electric lifting vertical column as defined in claim 1, further **characterized in that**:
said gearing device comprises a worm wheel (31), a head (32) connected to said worm wheel (31) and a gearing rod joint (33) which are sequentially connected together;
an output shaft of said motor (1) drives the worm wheel (31) to rotate;
the worm wheel (31) sequentially drives the head (32) connected to said worm wheel (31) and the gearing rod joint (33) to rotate; and
said gearing rod joint (33) drives a gearing rod (44) in the lifting vertical column to rotate, and it smoothly realizes the lifting procedure of the lifting vertical column.

7. A driving device of an electric lifting vertical column as defined in claim 6, further **characterized in that**:
the bottom of said worm wheel (31) is fixed with gearing grooves (311),
the gearing bulges (321) are set corresponding to the gearing grooves (311) on the top of said head (32) connected to said worm wheel (31),
said gearing bulges (321) are embedded inside of the gearing grooves (311) to realize the gearing procedure.

8. A driving device of an electric lifting vertical column as defined in claim 7, further **characterized in that**:
said gearing bulges (321) are cylindrical, and said gearing bulges (321) are uniformly distributed on the circular top surface of the head (32) connected to said worm wheel (31),
said gearing grooves (311) are hollow cylinder and distributed correspondingly to the gearing bulges (321).

9. A driving device of an electric lifting vertical column as defined in claims 1 or 6, further **characterized in that**:
the fixing plates (35) are set on said bottom box (2) and said bottom of fixing plates (35) contact to the gearing rod joint (33),
said head (32) connected to said worm wheel (31) passes through the fixing plates (35) and connects to the gearing rod joint (33).

10. A driving device of an electric lifting vertical column as defined in claim 6, further **characterized in that**:
a distance collar (34) is set on the front of said motor (1), and the limiting grooves (12) are uniformly distributed on said motor (1),
the limiting bulges are set on said distance collar (34) corresponding to the limiting grooves (12), the top of the distance collar (34) is higher than the top of said motor (1) when the limiting bulges are embedded into the limiting grooves (12),
said bottom plate (3) contacts with the distance collar (34) in order to fix the motor.

## Patentansprüche

1. Antriebsvorrichtung einer elektrischen Vertikalhubsäule, welche eine Motorummantelung, einen Motor (1) und eine Getriebevorrichtung umfasst, wobei der Motor (1) die Getriebevorrichtung antreibt, die eine Auf- und Abbewegung der Vertikalhubsäule bewirkt;
wobei
die Motorummantelung eine Bodenbox (2) und eine Bodenplatte (3) umfasst;
ein Abschlusskissen (21) an der Bodenbox (2) angeordnet ist; und
die Bodenplatte (3) abdichtend mit der Bodenbox (2) verbunden ist, um die Fixierung des Motors (1) zu realisieren;
**dadurch gekennzeichnet, dass**
zumindest zwei wechselseitig parallel verlaufende Stützblöcke (22) an der Bodenbox (2) angeordnet sind;
die Länge der Stützblöcke (22) jeweils kleiner als die Länge des Motors (1) ist;
elastische Stützblockmanschetten (23) auf die Stützblöcke (22) aufgestülpt sind;
beide Seiten des Motors (1) zwischen die elastischen Stützblockmanschetten (23) geklemmt sind; und
das hintere Ende des Motors (1) in das Abschlusskissen (21) eingebettet ist.

2. Antriebsvorrichtung einer elektrischen Vertikalhubsäule nach Anspruch 1, weiterhin **dadurch gekennzeichnet, dass**:
der Abstand zwischen den elastischen Stützblockmanschetten (23) geringer als die Breite des Motors (1) ist,
der Motor (1) eng zwischen die gepressten, elastischen Stützblockmanschetten (23) eingepasst ist.

3. Antriebsvorrichtung einer elektrischen Vertikalhubsäule nach Anspruch 1 oder 2, weiterhin **dadurch gekennzeichnet, dass**:
die elastischen Stützblockmanschetten (23) aus Gummi gefertigt sind.

4. Antriebsvorrichtung einer elektrischen Vertikalhubsäule nach Anspruch 1, weiterhin **dadurch gekennzeichnet, dass**:
eine Ausnehmung (211), die dem hinteren Ende des Motors (1) entspricht, an dem Abschlusskissen (21) eingerichtet ist und das hintere Ende des Motors (1) durch eine enge Anpassung an die Ausnehmung (211) im Inneren des Abschlusskissens (21) fixiert ist.

5. Antriebsvorrichtung einer elektrischen Vertikalhubsäule nach Anspruch 1 oder 4, weiterhin **dadurch gekennzeichnet, dass**:
das Abschlusskissen (21) aus Gummi gefertigt ist.

6. Antriebsvorrichtung einer elektrischen Vertikalhubsäule nach Anspruch 1, weiterhin **dadurch gekennzeichnet, dass**:
die Getriebevorrichtung ein Schneckenrad (31), einen Kopf (32), der mit dem Schneckenrad (31) verbunden ist, und eine Getriebestangenverbindung (33), die aufeinanderfolgend miteinander verbunden sind, umfasst;
eine Abtriebswelle des Motors (1) das Schneckenrad (31) antreibt und in Drehung versetzt;
das Schneckenrad (31) in aufeinanderfolgender Reihenfolge den mit dem Schneckenrad (31) verbundenen Kopf (32) und die Getriebestangenverbindung (33) antreibt und in Drehung versetzt; und
die Getriebestangenverbindung (33) eine in der Vertikalhubsäule befindliche Getriebestange (44) antreibt und in Drehung versetzt und dadurch den Hebevorgang der Vertikalhubsäule reibungslos umsetzt.

7. Antriebsvorrichtung einer elektrischen Vertikalhubsäule nach Anspruch 6, weiterhin **dadurch gekennzeichnet, dass**:
an der Unterseite des Schneckenrads (31) Eingriffsaussparungen (311) vorgesehen sind,
die Eingriffsvorsprünge (321) den Eingriffsaussparungen (311) entsprechend an der Oberseite des mit dem Schneckenrad (31) verbundenen Kopfes (32) vorgesehen sind,
die Eingriffsvorsprünge (321) in den Eingriffsaussparungen (311) eingebettet sind, um den Getriebevorgang umzusetzen.

8. Antriebsvorrichtung einer elektrischen Vertikalhubsäule nach Anspruch 7, weiterhin **dadurch gekennzeichnet, dass**:
die Eingriffsvorsprünge (321) zylindrisch ausgebildet sind und die Eingriffsvorsprünge (321) gleichmäßig über die kreisförmige Fläche der Oberseite des mit dem Schneckenrad (31) verbundenen Kopfes (32) verteilt sind,
die Eingriffsaussparungen (311) Hohlzylinder darstellen und den Eingriffsvorsprüngen (321) entsprechend verteilt sind.

9. Antriebsvorrichtung einer elektrischen Vertikalhubsäule nach Anspruch 1 oder 6, weiterhin **dadurch gekennzeichnet, dass**:
die Befestigungsplatten (35) auf die Bodenbox (2) gesetzt werden und die Unterseiten der Befestigungsplatten (35) mit der Getriebestangenverbindung (33) in Kontakt sind,
der mit dem Schneckenrad (31) verbundene Kopf (32) durch die Befestigungsplatten (35) hindurch verläuft und mit der Getriebestangenverbindung (33) in Kontakt ist.

10. Antriebsvorrichtung einer elektrischen Vertikalhubsäule nach Anspruch 6, weiterhin **dadurch gekennzeichnet, dass**:
ein Distanzkragen (34) an der vorderen Seite des Motors (1) eingerichtet ist und die Begrenzungsausnehmungen (12) gleichmäßig an dem Motor (1) verteilt sind,
die Begrenzungsvorsprünge den Begrenzungsausnehmungen (12) entsprechend an dem Distanzkragen (34) eingerichtet sind und die Oberseite des Distanzkragens (34) höher als die Oberseite des Motors (1) ist, wenn die Begrenzungsvorsprünge in die Begrenzungsausnehmungen (12) eingebettet sind,
die Bodenplatte (3) mit dem Distanzkragen (34) in Kontakt ist, um den Motor zu fixieren.

## Revendications

1. Dispositif d'entraînement d'une colonne de levage verticale électrique qui comprend une enveloppe moteur, un moteur (1) et un dispositif d'engrenage, le moteur (1) entraînant le dispositif d'engrenage qui engendre le mouvement de levée et de descente de la colonne de levage verticale;
l'enveloppe moteur comprenant une boîte de fond (2) et une plaque de fond (3);
un coussinet d'extrémité (21) étant disposé sur la boîte de fond (2); et
la plaque de fond (3) étant reliée de manière hermétique à la boîte de fond (2) afin de réaliser la fixation du moteur (1);
**caractérisé en ce que**
au moins deux blocs de support (22) s'étendant parallèlement l'un à l'autre sont disposés sur la boîte de fond (2);
la longueur des blocs de support (22) est respectivement inférieure à la longueur du moteur (1);
des manchettes de bloc de support élastiques (23) sont placées sur les blocs de support (22);
les deux côtés du moteur (1) sont calés entre les manchettes de bloc de support élastiques (23); et
l'extrémité arrière du moteur (1) repose dans le coussinet d'extrémité (21).

2. Dispositif d'entraînement d'une colonne de levage verticale électrique selon la revendication 1, **caractérisé en outre en ce que**
la distance entre les manchettes de bloc de support élastiques (23) est inférieure à la largeur du moteur (1),
le moteur (1) est installé de manière étroite entre les manchettes de bloc de support élastiques pressées (23).

3. Dispositif d'entraînement d'une colonne de levage verticale électrique selon la revendication 1 ou 2, **caractérisé en outre en ce que**
les manchettes de bloc de support élastiques (23) sont réalisées en caoutchouc.

4. Dispositif d'entraînement d'une colonne de levage verticale électrique selon la revendication 1, **caractérisé en outre en ce que**
un évidement (211) qui correspond à l'extrémité arrière du moteur (1) est ménagé dans le coussinet d'extrémité (21) et **en ce que** l'extrémité arrière du moteur (1) est fixée à l'intérieur du coussinet d'extrémité (21) par le fait d'être très étroitement ajustée à l'évidement (211).

5. Dispositif d'entraînement d'une colonne de levage verticale électrique selon la revendication 1 ou 4, **caractérisé en outre en ce que**
le coussinet d'extrémité (21) est réalisé en caoutchouc.

6. Dispositif d'entraînement d'une colonne de levage verticale électrique selon la revendication 1, **caractérisé en outre en ce que**
le dispositif d'engrenage comprend une roue à vis sans fin (31), une tête (32) reliée à ladite roue à vis sans fin (31) et un raccord de tige d'engrenage (33), lesquels éléments sont reliés les uns aux autres de manière successive;
un arbre entraîné du moteur (1) entraîne la roue à vis sans fin (31) et la fait tourner;
la roue à vis sans fin (31) entraîne successivement la tête (32) reliée à la roue à vis sans fin (31) et le raccord de tige d'engrenage (33) et les fait tourner; et
le raccord de tige d'engrenage (33) entraîne une tige d'engrenage (44) située dans la colonne de levage verticale et la fait tourner, engendrant ainsi le processus de levage de la colonne de levage verticale.

7. Dispositif d'entraînement d'une colonne de levage verticale électrique selon la revendication 6, **caractérisé en outre en ce que**
des évidements d'engagement (311) sont prévus sur la face inférieure de la roue à vis sans fin (31),
des saillies d'engagement (321) correspondant aux évidements d'engagement (311) sont prévues sur la face supérieure de la tête (32) reliée à la roue à vis sans fin (31),
les saillies d'engagement (321) sont noyées dans les évidements d'engagement (311) afin de réaliser le processus d'engrenage.

8. Dispositif d'entraînement d'une colonne de levage verticale électrique selon la revendication 7, **caractérisé en outre en ce que**
les saillies d'engagement (321) sont réalisées sous forme cylindrique et que des saillies d'engagement (321) sont réparties de manière régulière sur la surface circulaire de la face supérieure de la tête (32) reliée à la roue à vis sans fin (31),
les évidements d'engagement (311) sont des cylindres creux et que les saillies d'engagement (321) sont réparties de manière correspondante.

9. Dispositif d'entraînement d'une colonne de levage verticale électrique selon la revendication 1 ou 6, **caractérisé en outre en ce que**
les plaques de fixation (35) sont placées sur la boîte de fond (2) et que les faces inférieures des plaques de fixation (35) sont en contact avec le raccord de tige d'engrenage (33),
la tête (32) reliée à la roue à vis sans fin (31) s'étend à travers les plaques de fixation (35) et est en contact avec le raccord de tige d'engrenage (33).

10. Dispositif d'entraînement d'une colonne de levage verticale électrique selon la revendication 6, **caractérisé en outre en ce que**
un collier d'espacement (34) est placé sur la face avant du moteur (1) et que les évidements de limitation (12) sont répartis de manière régulière sur le moteur (1),
les saillies de limitation sont réalisées sur le collier d'espacement (34) de manière à correspondre aux évidements de limitation (12) et **en ce que** la face supérieure du collier d'espacement (34) est plus haute que la face supérieure du moteur (1) lorsque les saillies de limitation sont noyées dans les évidements de limitation (12),
la plaque de fond (3) est en contact avec le collier d'espacement (34) afin de fixer le moteur.
